# EUROPÄISCHE PATENTSCHRIFT

(11) **EP 2 766 209 B1**
(45) Veröffentlichungstag und Bekanntmachung des Hinweises auf die Patenterteilung: **22.05.2019**
(21) Anmeldenummer: 12783502.3
(22) Anmeldetag: 09.10.2012
(51) Int. Cl.: B60K 37/06

(54) **VERFAHREN UND VORRICHTUNG ZUM ANZEIGEN VON BETRIEBSZUSTÄNDEN VON EINRICHTUNGEN EINES FAHRZEUGS**
METHOD AND DEVICE FOR DISPLAYING OPERATING STATES OF UNITS OF A VEHICLE
PROCÉDÉ ET DISPOSITIF D'AFFICHAGE D'ÉTATS DE FONCTIONNEMENT D'ÉQUIPEMENTS DE BORD D'UN VÉHICULE

(30) Priorität: 15.10.2011 DE 102011116124
(43) Veröffentlichungstag der Anmeldung: 20.08.2014
(73) Patentinhaber: Volkswagen Aktiengesellschaft, 38440 Wolfsburg (DE)
(72) Erfinder: HAUSCHILD, Frank, 12159 Berlin (DE); KUHN, Mathias, 14129 Berlin (DE); PETERSEN, Sönke, 12205 Berlin (DE); LOU, Jian, 10707 Berlin (DE)
(86) Internationale Anmeldenummer: PCT/EP2012/004230
(87) Internationale Veröffentlichungsnummer: WO 2013/053464

(56) Entgegenhaltungen:
- WO-A2-2006/108617
- DE-A1-102010 012 239

## Beschreibung

Die vorliegende Erfindung betrifft ein Verfahren zum Anzeigen von Betriebszuständen von Einrichtungen eines Fahrzeugs. Ferner betrifft die Erfindung eine Vorrichtung zum Anzeigen von Betriebszuständen von Einrichtungen eines Fahrzeugs. Die Vorrichtung umfasst Sensoren zum Erfassen der Betriebszustände der Fahrzeugeinrichtungen sowie eine Anzeigevorrichtung zum Anzeigen graphischer Objekte zur Visualisierung der Betriebszustände des Fahrzeugs. Ferner umfasst die Vorrichtung eine Steuervorrichtung, die mit den Sensoren gekoppelt ist und mittels derer Graphikdaten zum Anzeigen der graphischen Objekte auf der Anzeigevorrichtung erzeugbar sind.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige zur Anzeige von Betriebszuständen von Fahrzeugeinrichtungen eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, sodass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Aus der EP 1 974 981 A2 ist ein Verfahren und eine Vorrichtung zum Anzeigen von Zuständen von Einrichtungen eines Fahrzeugs bekannt. Bei dem in dieser Druckschrift beschriebenen Verfahren werden die Zustände der Fahrzeugeinrichtungen erfasst und an eine Steuereinrichtung übertragen. Anschließend werden Bilddaten für eine graphische Darstellung einer Fahrzeugeinrichtung und ihres Zustands in einer graphischen Darstellung des Fahrzeugs erzeugt, wobei die Anordnung der Fahrzeugeinrichtung in dem Fahrzeug in der graphischen Darstellung im Wesentlichen der realen Anordnung entspricht. Die Bilddaten werden dann von einer Anzeigevorrichtung in dem Fahrzeug wiedergegeben. Dabei erfolgt die graphische Darstellung des Fahrzeugs und der Fahrzeugeinrichtungen auf Basis eines Oberflächenhüllenmodells, wobei die Transparenz der Darstellung des Oberflächenhüllenmodells des Fahrzeugs so gewählt wird, dass die dargestellten Fahrzeugeinrichtungen sichtbar sind.

Aus der DE 10 2010 012 239 A1 ist der Oberbegriff der Ansprüche 1 und 7 bekannt.

Der vorliegenden Erfindung liegt die Aufgabe zugrunde, ein Verfahren und eine Vorrichtung der eingangs genannten Art bereitzustellen, bei welchen Betriebsparameter des Kraftfahrzeugs vom Betrachter schnell und intuitiv erfasst werden können.

Erfindungsgemäß wird diese Aufgabe durch ein Verfahren mit den Merkmalen des Anspruchs 1 und eine Anzeigeeinrichtung mit den Merkmalen des Anspruchs 7 gelöst. Vorteilhafte Ausgestaltungen und Weiterbildungen ergeben sich aus den abhängigen Ansprüchen.

Bei dem erfindungsgemäßen Verfahren werden von einer Steuervorrichtung Graphikdaten erzeugt, die eine Anzeigevorrichtung so ansteuern, dass ein erstes graphisches Objekt mit einer Darstellung des Fahrzeugs in einem ersten Zustand angezeigt wird. Ferner werden die Betriebszustände der Fahrzeugeinrichtungen erfasst und an die Steuervorrichtung übertragen. Die Steuervorrichtung prüft dann, ob Informationen zu einem Betriebszustand ausgegeben werden sollen. Bei einem positiven Prüfungsergebnis, d.h. wenn Informationen zu einem Betriebszustand einer Fahrzeugeinrichtung ausgegeben werden sollen, wird die Darstellung des ersten graphischen Objekts so verändert, dass das Fahrzeug in einem zweiten Zustand aus einem Blickwinkel dargestellt wird, bei welchem die Fahrzeugeinrichtung, zu deren Betriebszustand Informationen ausgegeben werden sollen, vorne bei der Darstellung des Fahrzeugs angeordnet ist. Des Weiteren wird ein zweites graphisches Objekt mit einer graphischen Darstellung der Fahrzeugeinrichtung erzeugt, die in der veränderten graphischen Darstellung des Fahrzeugs so angezeigt wird, dass die Anordnung des zweiten graphischen Objekts der Fahrzeugeinrichtung in dem ersten graphischen Objekt des Fahrzeugs im Wesentlichen der realen Anordnung der Fahrzeugeinrichtung in dem Fahrzeug entspricht.

Bei dem erfindungsgemäßen Verfahren wird das graphische Objekt für die Fahrzeugeinrichtung, zu deren Betriebszustand Informationen angezeigt werden, vorteilhafterweise so in dem graphischen Objekt für das Fahrzeug angezeigt, dass es vorne im Fahrzeug angeordnet ist, sodass der Betrachter das graphische Objekt der Fahrzeugeinrichtung besonders schnell und intuitiv erfassen kann. Unter einer Darstellung vorne bei der Darstellung des Fahrzeugs wird im Sinne der Erfindung verstanden, dass der Blickwinkel auf die graphische Darstellung des Fahrzeugs so gewählt wird, dass die Fahrzeugeinrichtung sich aus Sicht des Betrachters möglichst weit vorne befindet. Dies bedeutet, dass der Betrachter direkt auf die Fahrzeugeinrichtung blickt, wenn sich die Einrichtung im Bereich der Außenhülle des Fahrzeugs befindet. Wenn sich die Fahrzeugeinrichtung im Inneren des Fahrzeugs befindet, verdeckt der Bereich für die Darstellung des Fahrzeugs die Darstellung der Fahrzeugeinrichtung so wenig wie möglich. Die Darstellung des zweiten graphischen Objekts in dem ersten graphischen Objekt wird insbesondere so gewählt, dass sie zum einen der realen Anordnung der Fahrzeugeinrichtung in dem Fahrzeug entspricht, zum anderen jedoch ein Blickwinkel auf das Fahrzeug mit der Fahrzeugeinrichtung dargestellt wird, bei dem die Darstellung der Fahrzeugeinrichtung so gut wie möglich erkennbar ist.

Gemäß einer Ausgestaltung des erfindungsgemäßen Verfahrens werden die Informationen zu dem Betriebszustand der Fahrzeugeinrichtung durch die Art der Darstellung des zweiten graphischen Objekts oder durch ein weiteres graphisches Objekt ausgegeben. Beispielsweise kann das zweite graphische Objekt in einer anderen Farbe angezeigt werden als das erste graphische Objekt, um es deutlich von der Darstellung des Fahrzeugs abzuheben und um gegebenenfalls eine Warnmeldung auszugeben. Durch die Darstellung eines weiteren graphischen Objekts können ferner Zusatzinformationen angezeigt werden.

Gemäß einer Ausgestaltung des erfindungsgemäßen Verfahrens stellt das erste graphische Objekt das Fahrzeug dreidimensional dar. Die Darstellung kann entweder perspektivisch oder autostereoskopisch erfolgen. Bei der perspektivischen oder autostereoskopischen Darstellung wird ein bestimmter Blickwinkel auf die dreidimensionale Darstellung des Fahrzeugs berechnet. Der Blickwinkel wird dabei so gewählt, dass die Fahrzeugeinrichtung vorne in dem Fahrzeug so gut wie möglich erkennbar ist.

Gemäß einer Weiterbildung des erfindungsgemäßen Verfahrens wird bei der Veränderung der Darstellung des ersten graphischen Objekts eine Bildfolge angezeigt, bei welcher das erste graphische Objekt von dem ersten Zustand in den zweiten Zustand übergeht. Insbesondere wird die Darstellung des Fahrzeugs in einer Animation so gedreht, dass die Fahrzeugeinrichtung in dem Fahrzeug bei der graphischen Darstellung so gut wie möglich erkennbar ist. Durch die Bildfolge kann sich der Betrachter besonders leicht bei der Darstellung des Fahrzeugs orientieren, da es keinen abrupten Übergang zwischen den beiden Zuständen gibt.

Gemäß einer weiteren Ausgestaltung des erfindungsgemäßen Verfahrens stellt das erste graphische Objekt im ersten Zustand eine undurchsichtige Außenhülle des Fahrzeugs dar. Im zweiten Zustand stellt das erste graphische Objekt das Fahrzeug hingegen transparent dar, wobei innerhalb des Fahrzeugs das zweite graphische Objekt der Fahrzeugeinrichtung sichtbar ist, wenn die Fahrzeugeinrichtung im Inneren des Fahrzeugs angeordnet ist. Die graphische Darstellung des Fahrzeugs geht somit von einer undurchsichtigen Darstellung in eine durchsichtige, transparente Darstellung über, um den Blick auf die graphische Darstellung der Fahrzeugeinrichtung freizugeben. Auch durch diese Art der Darstellung und des Übergangs zwischen den zwei Zuständen ist es dem Betrachter besonders einfach und intuitiv möglich, die Position der Fahrzeugeinrichtung und den zugehörigen Betriebszustand zu erfassen.

Das erste graphische Objekt stellt beispielsweise das Fahrzeug von hinten dar, wenn die Fahrzeugeinrichtung, zu deren Betriebszustand Informationen ausgegeben werden sollen, die Heckleuchten umfasst. Das erste graphische Objekt stellt das Fahrzeug hingegen von vorne dar, wenn die Fahrzeugeinrichtung, zu deren Betriebszustand Informationen ausgegeben werden sollen, die vorderen Scheinwerfer umfasst.

Die erfindungsgemäße Vorrichtung ist dadurch gekennzeichnet, dass mittels der Steuervorrichtung Graphikdaten erzeugbar sind, welche die Anzeigevorrichtung so ansteuern, dass ein erstes graphisches Objekt mit einer Darstellung des Fahrzeugs in einem ersten Zustand angezeigt wird, das so veränderbar ist, dass das Fahrzeug in einem zweiten Zustand aus einem Blickwinkel dargestellt wird, bei welchem die Fahrzeugeinrichtung, zu deren Betriebszustand Informationen ausgegeben werden sollen, vorne bei der Darstellung des Fahrzeugs angeordnet ist und ein zweites graphisches Objekt mit einer graphischen Darstellung der Fahrzeugeinrichtung erzeugt wird, das in der veränderten graphischen Darstellung des Fahrzeugs so angezeigt wird, dass die Anordnung des zweiten graphischen Objekts der Fahrzeugeinrichtung in dem ersten graphischen Objekt des Fahrzeugs im Wesentlichen der realen Anordnung der Fahrzeugeinrichtung in dem Fahrzeug entspricht.

Des Weiteren betrifft die Erfindung ein Fahrzeug mit einer solchen Vorrichtung.

Die Erfindung wird nun anhand eines Ausführungsbeispiels mit Bezug zu den Zeichnungen erläutert.
- Figur 1: zeigt ein Fahrzeug mit dem Ausführungsbeispiel der erfindungsgemäßen Vorrichtung,
- Figur 2: zeigt schematisch ein Ausführungsbeispiel der erfindungsgemäßen Vorrichtung und die Verbindung dieser Vorrichtung mit anderen Einrichtungen des Fahrzeugs,
- Figur 3: zeigt eine Schnittansicht der Anzeigevorrichtung des Ausführungsbeispiels der erfindungsgemäßen Vorrichtung, und
- die Figuren 4 bis 7: zeigen mittels eines Ausführungsbeispiels des erfindungsgemäßen Verfahrens auf einer Anzeigefläche wiedergegebene Anzeigen.

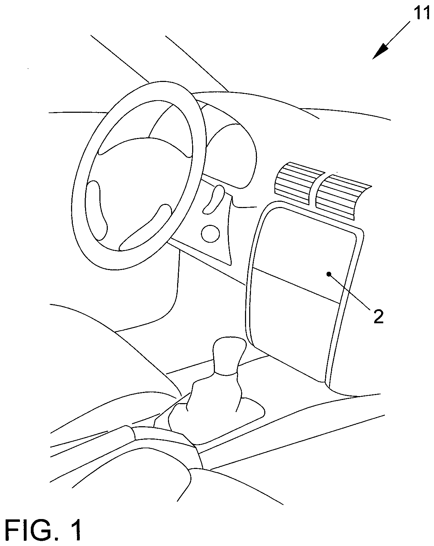

Mit Bezug zu den Figuren 1 bis 3 wird zunächst ein Ausführungsbeispiel der erfindungsgemäßen Vorrichtung und dessen Anordnung in einem Kraftfahrzeug 11 erläutert:
Eine Anzeigeeinrichtung 6 umfasst eine Anzeigevorrichtung 1 mit einer Anzeigefläche 2, die so im Innenraum des Kraftfahrzeugs 11 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Anzeigeeinrichtung 6 umfasst ferner eine Steuervorrichtung 3, welche mit der Anzeigevorrichtung 1 verbunden ist und mit welcher Graphikdaten zur Informationsdarstellung auf der Anzeigefläche 2 erzeugbar sind. Des Weiteren ist die Anzeigeeinrichtung 6 mit einer Eingabevorrichtung gekoppelt, die als berührungsempfindliche Oberfläche 4 auf der Anzeigefläche 2 ausgebildet ist. Es wird somit ein sogenannter Touchscreen bereitgestellt.

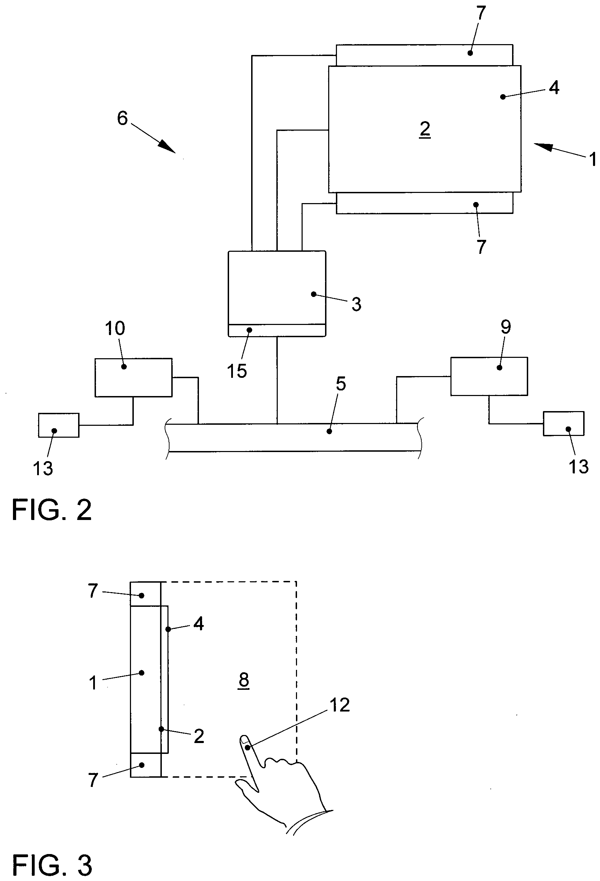

Des Weiteren ist die Anzeigeeinrichtung 6 mit einer Annäherungserfassungseinrichtung 7 gekoppelt. Mittels der Annäherungserfassungseinrichtung 7 kann ein Betätigungsobjekt 12, z. B. die Fingerspitze eines Nutzers, in einem Detektionsbereich 8 erfasst werden. Der Detektionsbereich 8 ist in Fig. 3 im Detail dargestellt. Der Detektionsbereich 8 ist so gebildet, dass eine Annäherung eines Betätigungsobjekts 12 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der berührungsempfindlichen Oberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 12 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 12 im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 über eine Schnittstelle 15 mit einem Datenbus 5 gekoppelt. Über diesen Datenbus 5 ist die Steuervorrichtung 3 mit weiteren Einrichtungen 9, 10 des Kraftfahrzeugs 11 verbunden, zu denen Informationen auf der Anzeigefläche 2 angezeigt werden sollen.

Bei den Einrichtungen 9 und 10 handelt es sich beispielsweise um den Antriebsmotor des Fahrzeugs 11, um die Heckleuchten des Fahrzeugs 11 oder um Reifendruckdetektoren. Die Einrichtungen 9 und 10 sind jeweils mit Sensoren 13 verbunden, welche Betriebszustände der Einrichtungen 9 und 10 erfassen. Beispielsweise erfasst ein Sensor 13 des Motors einen Ölstand und überträgt ihn über den Datenbus 5 an die Steuervorrichtung 3. Der Sensor 13 für die Heckleuchten erfasst, ob eine Lichtquelle der Heckleuchten defekt ist und überträgt auch entsprechende Informationen an die Steuervorrichtung 3. Der Sensor 13 für den Reifendruckdetektor überträgt den Reifendruck an die Steuervorrichtung 3.

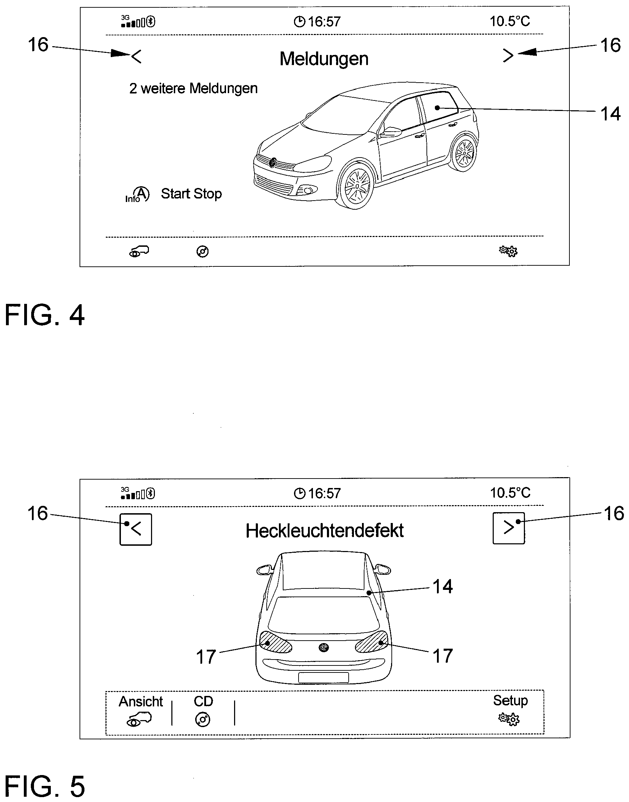

Im Folgenden wird ein Ausführungsbeispiel des erfindungsgemäßen Verfahrens, welches von der vorstehend beschriebenen Vorrichtung ausführbar ist, mit Bezug zu den Figuren 4 bis 7 im Detail erläutert:
Der Nutzer kann durch einen Bedienvorgang auf an sich bekannte Weise mittels der berührungsempfindlichen Oberfläche 4 in einer hierarchischen Menüstruktur, welche auf der Anzeigefläche 2 angezeigt wird, eine Multifunktionsanzeige des Kraftfahrzeugs 11 zur Anzeige bringen, welche verschiedene Betriebsparameter und Betriebszustände des Kraftfahrzeugs 11 anzeigt. Eine solche Anzeige ist in Figur 4 gezeigt.

Es wird ein erstes graphisches Objekt 14 angezeigt, welches das Kraftfahrzeug 11 perspektivisch in einer Ansicht von schräg oben darstellt. Dabei wird in diesem ersten Zustand der Darstellung des Fahrzeugs 11 eine undurchsichtige Außenhülle des Fahrzeugs 11 dargestellt. Zum Erzeugen der Graphikdaten für die Darstellung des ersten graphischen Objekts 14 kann die Steuervorrichtung 3 beispielsweise auf ein Oberflächenhüllenmodell des Fahrzeugs 11 zurückgreifen, wie es beispielsweise in der EP 1 974 981 A1 beschrieben ist.

Des Weiteren wertet die Steuervorrichtung 3 fortwährend die von den Sensoren 13 übertragenen Daten aus und prüft, ob Informationen zu einem Betriebszustand einer Fahrzeugeinrichtung 9, 10 ausgegeben werden sollen. Eine solche Ausgabe kann zum einen durch eine Eingabe des Nutzers initiiert werden. Zum anderen kann die Steuervorrichtung 3 prüfen, ob ein Betriebszustand einen gespeicherten Grenzwert überschritten hat, sodass eine Warnmeldung ausgegeben werden muss.

Wenn Informationen zu Betriebszuständen von Einrichtungen 9, 10 des Fahrzeugs 11 ausgegeben werden sollen, erzeugt die Steuervorrichtung 3 in der Anzeige gemäß Figur 4 Hinweise auf solche Meldungen. Ferner werden Schaltflächen 16 dargestellt, über welche der Nutzer Anzeigen zu den Meldungen aufrufen kann.

Wenn der Nutzer eine der Schaltflächen 16 betätigt, wird beispielsweise die in Figur 5 wiedergegebene Anzeige auf der Anzeigefläche 2 erzeugt, welche auf einen Defekt der Heckleuchten hinweist. Beim Übergang von der Anzeige gemäß Figur 4 in die Anzeige gemäß Figur 5 wird das erste graphische Objekt 14 für das Fahrzeug 11 so gedreht, dass die Darstellung der Heckleuchten bei der perspektivischen Darstellung vorne angeordnet sind. Des Weiteren wird in dem ersten graphischen Objekt 14 ein zweites graphisches Objekt 17 für die Heckleuchten angezeigt. Das zweite graphische Objekt 17 ist so in dem ersten graphischen Objekt 14 angeordnet wie es der realen Anordnung der Heckleuchten in dem Fahrzeug 11 entspricht. Um den Nutzer auf einen Defekt einer Lichtquelle der Heckleuchten hinzuweisen, wird das erste graphische Objekt 14 in grau dargestellt, das zweite graphische Objekt 17 für die Heckleuchten hingegen in rot, damit der Betrachter schnell auf den Defekt einer Lichtquelle der Heckleuchten hingewiesen wird.

Des Weiteren wird ein weiteres graphisches Objekt 18 angezeigt, welches alphanumerisch auf den Defekt der Heckleuchten hinweist.

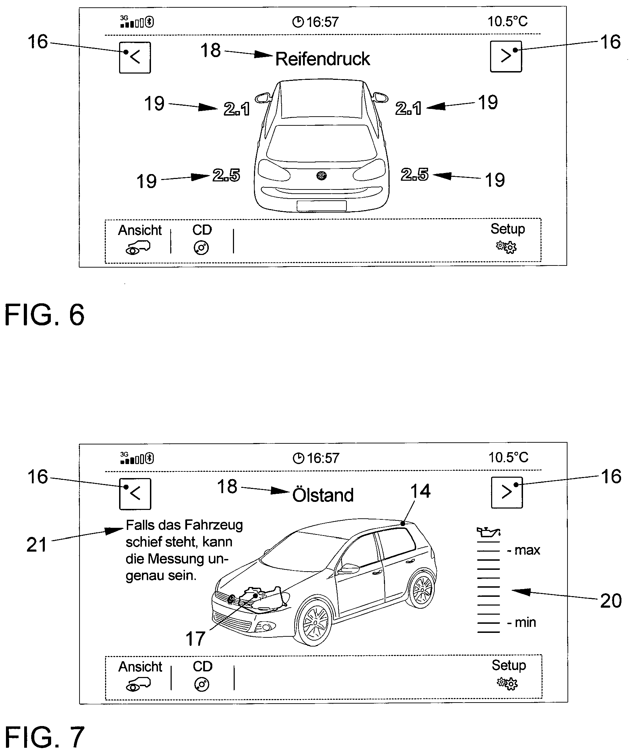

Wenn kein Heckleuchtendefekt vorliegen würde, sondern der Nutzer mittels einer Eingabe Informationen zu dem aktuellen Reifendruck abgefragt hätte, würde die in Figur 6 wiedergegebene Anzeige dargestellt werden, bei welcher graphische Objekte 19 angezeigt werden, welche die Messwerte für den Reifendruck angeben.

Wenn der Nutzer durch Betätigung einer Schaltfläche 16 die zweite Meldung abruft, gelangt er zu der in Figur 7 wiedergegebenen Anzeige. Bei dem Übergang von der Anzeige gemäß Figur 5 zu der Anzeige gemäß Figur 7 wird das erste graphische Objekt 14 für die perspektivische Darstellung des Fahrzeugs 11 wieder gedreht, bis das Fahrzeug 11 von dem ersten graphischen Objekt 14 unter einem Blickwinkel dargestellt wird, bei welchem das zweite graphische Objekt 17, welches in diesem Fall den Motor des Fahrzeugs 11 darstellt, vorne angezeigt wird. Da sich der Motor im Inneren des Fahrzeugs 11 befindet, wird das erste graphische Objekt 14 des Fahrzeugs 11 nun transparent dargestellt, wobei innerhalb der Darstellung des Fahrzeugs das zweite graphische Objekt 17 für den Motor sichtbar ist. Des Weiteren wird ein graphisches Objekt 20 angezeigt, welches den Messwert für den Ölstand des Motors visualisiert. Schließlich wird noch ein weiteres graphisches Objekt 21 angezeigt, welches einen Hinweis zu dem Betriebszustand des Motors anzeigt.

### Bezugszeichenliste

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Anzeigeeinrichtung
- 7: Annäherungserfassungseinrichtung
- 8: Detektionsbereich
- 9: Einrichtung des Fahrzeugs
- 10: Einrichtung des Fahrzeugs
- 11: Kraftfahrzeug
- 12: Betätigungsobjekt, Fingerspitze
- 13: Sensoren
- 14: erstes graphisches Objekt
- 15: Schnittstelle
- 16: Schaltflächen
- 17: zweites graphisches Objekt
- 18: graphisches Objekt
- 19: graphisches Objekt
- 20: graphisches Objekt
- 21: graphisches Objekt

## Patentansprüche

1. Verfahren zum Anzeigen von Betriebszuständen von Einrichtungen (9, 10) eines Fahrzeugs (11), bei dem
- von einer Steuervorrichtung (3) Graphikdaten erzeugt werden, die eine Anzeigevorrichtung (1) so ansteuern, dass ein erstes graphisches Objekt (14) mit einer Darstellung des Fahrzeugs (11) in einem ersten Zustand angezeigt wird,
- die Betriebszustände der Fahrzeugeinrichtungen (9, 10) erfasst und an die Steuervorrichtung (3) übertragen werden,
- die Steuervorrichtung (3) prüft, ob Informationen zu einem Betriebszustand ausgegeben werden sollen,
**dadurch gekennzeichnet, dass**
- bei einem positiven Prüfungsergebnis die Darstellung des ersten graphischen Objekts (14) so verändert wird, dass das Fahrzeug (11) in einem zweiten Zustand aus einem Blickwinkel dargestellt wird, der so gewählt wird, dass sich die Fahrzeugeinrichtung (9, 10) bei der Darstellung des Fahrzeugs aus Sicht eines Betrachters möglichst weit vorne befinden, so dass die Fahrzeugeinrichtung (9, 10), zu deren Betriebszustand Informationen ausgegeben werden sollen, vorne bei der Darstellung des Fahrzeugs (11) angeordnet ist, und
- dass ein zweites graphisches Objekt (17) mit einer graphischen Darstellung der Fahrzeugeinrichtung (9, 10) erzeugt wird, die innerhalb der veränderten graphischen Darstellung des Fahrzeugs (11) so angezeigt wird, dass die Anordnung des zweiten graphischen Objekts (17) der Fahrzeugeinrichtung (9, 10) in dem ersten graphischen Objekt (14) des Fahrzeugs (11) im Wesentlichen der realen Anordnung der Fahrzeugeinrichtung (9, 10) in dem Fahrzeug (11) entspricht.

2. Verfahren nach Anspruch 1,
**dadurch gekennzeichnet,**
**dass** der Betriebszustand der Fahrzeugeinrichtung (9, 10) durch die Art der Darstellung des zweiten graphischen Objekts (17) und/oder durch ein weiteres graphisches Objekt (10, 21) angezeigt wird.

3. Verfahren nach Anspruch 1 oder 2,
**dadurch gekennzeichnet,**
**dass** das erste graphische Objekt (14) das Fahrzeug (11) dreidimensional darstellt.

4. Verfahren nach einem der vorhergehenden Ansprüche,
**dadurch gekennzeichnet,**
**dass** bei der Veränderung der Darstellung des ersten graphischen Objekts (14) eine Bildfolge angezeigt wird, bei welcher das erste graphische Objekt (14) von dem ersten Zustand in den zweiten Zustand übergeht.

5. Verfahren nach einem der vorhergehenden Ansprüche,
**dadurch gekennzeichnet,**
**dass** das erste graphische Objekt (14) im ersten Zustand eine undurchsichtige Außenhülle des Fahrzeugs (11) darstellt und dass das erste graphische Objekt (14) im zweiten Zustand das Fahrzeug (11) transparent darstellt, wobei innerhalb des Fahrzeugs (11) das zweite graphische Objekt (17) der Fahrzeugeinrichtung (9, 10) sichtbar ist, wenn die Fahrzeugeinrichtung (9, 10) im Inneren des Fahrzeugs (11) angeordnet ist.

6. Verfahren nach einem der vorhergehenden Ansprüche,
**dadurch gekennzeichnet,**
**dass** das erste graphische Objekt (14) das Fahrzeug (11) von hinten darstellt, wenn die Fahrzeugeinrichtung (9, 10), zu deren Betriebszustand Informationen ausgegeben werden sollen, die Heckleuchten umfasst und/oder das erste graphische Objekt (14) das Fahrzeug (11) von vorne darstellt, wenn die Fahrzeugeinrichtung (9, 10), zu deren Betriebszustand Informationen ausgegeben werden sollen, die vorderen Scheinwerfer umfasst.

7. Vorrichtung zum Anzeigen von Betriebszuständen von Einrichtungen (9, 10) eines Fahrzeugs (11) mit
- Sensoren (13) zum Erfassen der Betriebszustände der Fahrzeugeinrichtungen (9, 10),
- einer Anzeigevorrichtung (11) zum Anzeigen graphischer Objekte zur Visualisierung der Betriebszustände des Fahrzeugs (11) und
- einer Steuervorrichtung (3), die mit den Sensoren (13) gekoppelt ist und mittels derer Graphikdaten zum Anzeigen der graphischen Objekte auf der Anzeigevorrichtung erzeugbar sind,
**dadurch gekennzeichnet, dass**
- mittels der Steuervorrichtung (3) Graphikdaten erzeugbar sind, welche die Anzeigevorrichtung (1) so ansteuern, dass ein erstes graphisches Objekt (14) mit einer Darstellung des Fahrzeugs (11) in einem ersten Zustand angezeigt wird, das so veränderbar ist, dass das Fahrzeug (11) in einem zweiten Zustand aus einem Blickwinkel dargestellt wird, der so gewählt wird, dass sich die Fahrzeugeinrichtungen (9, 10) bei der Darstellung des Fahrzeugs aus Sicht eines Betrachters möglichst weit vorne befinden, so dass die Fahrzeugeinrichtung (9, 10), zu deren Betriebszustand Informationen ausgegeben werden sollen, vorne bei der Darstellung des Fahrzeugs (11) angeordnet ist, und ein zweites graphisches Objekt (17) mit einer graphischen Darstellung der Fahrzeugeinrichtung (9, 10) erzeugt wird, das innerhalb der veränderten graphischen Darstellung des Fahrzeugs (11) so angezeigt wird, dass die Anordnung des zweiten graphischen Objekts (17) der Fahrzeugeinrichtung (9, 10) in dem ersten graphischen Objekt (14) des Fahrzeugs (11) im Wesentlichen der realen Anordnung der Fahrzeugeinrichtung (9, 10) in dem Fahrzeug (11) entspricht.

8. Fahrzeug (11) mit einer Vorrichtung zum Anzeigen von Betriebszuständen nach Anspruch 7.

## Claims

1. A method for displaying operating states of units (9, 10) of a vehicle (11), in which
- graphics data are generated by a control device (3), which data control a display device (1), such that a first graphic object (14) is displayed with a representation of the vehicle (11) in a first state,
- the operating states of the vehicle units (9, 10) are detected and transmitted to the control device (3),
- the control device (3) checks whether information relating to an operating state is to be output,
**characterized in that**
- in the event of a positive result of the check the representation of the first graphics object (14) is changed so that the vehicle (11) is represented in a second state from a viewing angle, which is selected, so that the vehicle units (9, 10) are as far forward as possible in the representation of the vehicle from the perspective of a viewer, so that the vehicle unit (9, 10), regarding the operating state of which information is to be output, is arranged at the front in the representation of the vehicle (11), and
- that a second graphic object (17) is generated with a graphical representation of the vehicle unit (9, 10), which is displayed within the changed graphical representation of the vehicle (11), so that the arrangement of the second graphic object (17) of the vehicle unit (9, 10) substantially corresponds in the first graphic object (14) of the vehicle (11) to the real arrangement of the vehicle unit (9, 10) in the vehicle (11).

2. A method according to Claim 1,
**characterized in**
**that** the operating state of the vehicle unit (9, 10) is displayed by the kind of the representation of the second graphic object (17) and/or by a further graphic object (10, 21).

3. A method according to Claim 1 or 2,
**characterized in**
**that** the first graphic object (14) represents the vehicle (11) three-dimensionally.

4. A method according to any one of the preceding claims,
**characterized in**
**that** in the event of the change of the representation of the first graphic object (14) a sequence of images is displayed, in which the first graphic object (14) passes from the first state to the second state.

5. A method according to any one of the preceding claims,
**characterized in**
**that** the first graphic object (14) in the first state represents an opaque outer-shell of the vehicle (11) and that the first graphic object (14) in the second state represents the vehicle (11) transparently, wherein within the vehicle (11) the second graphic object (17) of the vehicle unit (9, 10) is visible, if the vehicle unit (9, 10) is arranged in the interior of the vehicle (11).

6. A method according to any one of the preceding claims,
**characterized in**
**that** the first graphic object (14) represents the vehicle (11) from behind, if the vehicle unit (9, 10), regarding the operating state of which information is to be output, comprises the tail lights and/or the first graphic object (14) represents the vehicle (11) from the front, if the vehicle unit (9, 10), regarding the operating state of which information is to be output, which comprises the front headlights.

7. A device for displaying operating states of units (9, 10) of a vehicle (11) with
- sensors (13) for detecting the operating states of the vehicle units (9, 10),
- a display device (11) for displaying graphic objects for visualizing the operating states of the vehicle (11) and
- a control device (3), which is coupled with the sensors (13) and by means of which graphics data can be generated for displaying the graphic objects on the display device,
**characterized in that**
- by means of the control device (3) graphics data can be generated, which control the display device (1) such that a first graphic object (14) is displayed with a representation of the vehicle (11) in a first state, which can be changed so that that vehicle (11) is represented in a second state from a viewing angle, which is selected so that the vehicle units (9, 10) are as far forward as possible in the representation of the vehicle from the perspective of a viewer, so that the vehicle unit (9, 10), regarding the operating state of which information is to be output, is arranged at the front in the representation of the vehicle (11), and a second graphic object (17) is generated with a graphical representation of the vehicle unit (9, 10), which is displayed in the changed graphical representation of the vehicle (11), so that the arrangement of the second graphic object (17) of the vehicle unit (9, 10) substantially corresponds in the first graphic object (14) of the vehicle (11) to the real arrangement of the vehicle unit (9, 10) in the vehicle (11).

8. A vehicle (11) with a device for displaying operating states according to Claim 7.

## Revendications

1. Procédé d'affichage d'états de fonctionnement de dispositifs (9, 10) d'un véhicule (11) dans lequel
- des données graphiques, qui contrôlent un dispositif d'affichage (1) de façon à ce qu'un premier objet graphique (14) soit affiché avec une représentation du véhicule (11) dans un premier état, sont générées par un dispositif de commande (3),
- les états de fonctionnement des dispositifs du véhicule (9, 10) sont détectés et transmis au dispositif de commande (3),
- le dispositif de commande (3) vérifie si des informations concernant un état de fonctionnement doivent être envoyées,
**caractérisé en ce que**
- dans le cas d'un résultat de vérification positif, la représentation du premier objet graphique (14) est modifiée de façon à ce que le véhicule (11) soit représenté dans un deuxième état à partir d'un angle de vue qui est choisi de façon à ce que le dispositif du véhicule (9, 10) se trouve le plus loin possible à l'avant sur la représentation du véhicule du point de vue d'un observateur, de sorte que le dispositif du véhicule (9, 10), à propos de l'état de fonctionnement duquel des infirmations doivent être envoyées, soit disposé à l'avant sur la représentation du véhicule (11) et
- un deuxième objet graphique (17) avec une représentation graphique du dispositif du véhicule (9, 10) est généré, qui est affiché à l'intérieur de la représentation graphique modifiée du véhicule (11) de façon à ce que la disposition du deuxième objet graphique (17) du dispositif du véhicule (9, 10) dans le premier objet graphique (14) du véhicule (11) corresponde globalement à la disposition réelle du dispositif du véhicule (9, 10) dans le véhicule (11).

2. Procédé selon la revendication 1,
**caractérisé en ce que**
l'état de fonctionnement du dispositif du véhicule (9, 10) est affiché à l'aide du type de représentation du deuxième objet graphique (17) et/ou à l'aide d'un autre objet graphique (10, 21).

3. Procédé selon la revendication 1 ou 2,
**caractérisé en ce que**
le premier objet graphique (14) représente le véhicule (11) de manière tridimensionnelle.

4. Procédé selon l'une des revendications précédentes,
**caractérisé en ce que**
lors de la modification de la représentation du premier objet graphique (14), une série d'images est affichée, dans laquelle le premier objet graphique (14) passe du premier état au deuxième état.

5. Procédé selon l'une des revendications précédentes,
**caractérisé en ce que**
le premier objet graphique (14) représente, dans le premier état, une enveloppe extérieure opaque du véhicule (11) et le premier objet graphique (14) représente, dans le deuxième état le véhicule (11) de manière transparente, le deuxième objet graphique (17) du dispositif du véhicule (9, 10) étant visible à l'intérieur du véhicule (11) lorsque le dispositif du véhicule (9, 10) est disposé à l'intérieur du véhicule (11).

6. Procédé selon l'une des revendications précédentes,
**caractérisé en ce que**
le premier objet graphique (14) représente le véhicule (11) de derrière lorsque le dispositif du véhicule (9, 10), à propos de l'état de fonctionnement duquel des infirmations doivent être envoyées, comprend les feux arrière et/ou le premier objet graphique (14) représente le véhicule (11) de devant lorsque le dispositif du véhicule (9, 10), à propos de l'état de fonctionnement duquel des infirmations doivent être envoyées, comprend les phares avant.

7. Dispositif d'affichage d'états de fonctionnement de dispositifs (9, 10) d'un véhicule (11), avec
- des capteurs (13) pour la détection des états de fonctionnement des dispositifs du véhicule (9, 10),
- un dispositif d'affichage (11) pour l'affichage d'objets graphiques pour la visualisation des états de fonctionnement du véhicule (11) et
- un dispositif de commande (3), qui est couplé avec les capteurs (13) et au moyen duquel des données graphiques pour l'affichage des objets graphiques sur le dispositif d'affichage peuvent être générées,
**caractérisé en ce que**
- au moyen du dispositif de commande (3), des données graphiques peuvent être générées, qui contrôlent le dispositif d'affichage (1) de façon à ce qu'un premier objet graphique (14) soit affiché avec une représentation du véhicule (11) dans un premier état, qui peut être modifié de façon à ce que le véhicule (11) soit représente dans un deuxième état à partir d'un angle de vue qui est choisi de façon à ce que le dispositif du véhicule (9, 10), à propos de l'état de fonctionnement duquel des infirmations doivent être envoyées, soit disposé à l'avant sur la représentation du véhicule (11) et un deuxième objet graphique (17) avec une représentation graphique du dispositif du véhicule (9, 10), qui est affiché à l'intérieur de la représentation graphique modifiée du véhicule (11), de façon à ce que la disposition du deuxième objet graphique (17) du dispositif du véhicule (9, 10) dans le premier objet graphique (14) du véhicule (11) corresponde globalement à la disposition réelle du dispositif du véhicule (9, 10) dans le véhicule (11).

8. Véhicule (11) avec un dispositif d'affichage d'états de fonctionnement selon la revendication 7.
